# EUROPEAN PATENT APPLICATION

(11) **EP 3 882 784 A1**
(43) Date of publication of application: **22.09.2021**
(21) Application number: 21162251.9
(22) Date of filing: 12.03.2021
(51) Int. Cl.: G06F 16/332, G06F 16/36

(54) **EVENT ARGUMENT EXTRACTION METHOD AND APPARATUS AND ELECTRONIC DEVICE**

(30) Priority: 20.03.2020 CN 202010202896
(71) Applicant: Beijing Baidu Netcom Science and Technology Co., Ltd., Beijing 100085 (CN)
(72) Inventor: LI, Fayuan, Beijing, 100085 (CN); CHEN, Yuguang, Beijing, 100085 (CN); PAN, Lu, Beijing, 100085 (CN); LIU, Yuanzhen, Beijing, 100085 (CN); HAN, Cuiyun, Beijing, 100085 (CN); SHI, Xi, Beijing, 100085 (CN); HUANG, Jiayan, Beijing, 100085 (CN)
(74) Representative: Studio Torta S.p.A.

(57) **Abstract**

An event argument extraction method, an event argument extraction apparatus and an electronic device are disclosed, which relate to the field of knowledge graph technology. A specific implementation is: acquiring a to-be-extracted event content; and performing an argument extraction on the to-be-extracted event content based on a trained event argument extraction model, to acquire an target argument of the to-be-extracted event content; where, the trained event argument extraction model is acquired by training an intermediate extraction model by using event news annotation data, and the intermediate extraction model is acquired by training a pre-trained model by using event news samples and reading comprehension data.

## Description

### TECHNICAL FIELD

The present disclosure relates to the technical field of knowledge graph in computer technologies, in particular to an event argument extraction method, an event argument extraction apparatus and an electronic device.

### BACKGROUND

Event argument extraction refers to the extraction of various elements (time, place, participant, relevant content of an event adaptation, etc.) of an event from an event description. Each element is an argument, and each argument corresponds to an argument role. Then the extracted arguments are presented to users in form of structural knowledge.

Conventionally, a commonly used event argument extraction model is based on an idea of classification. However, event arguments roles for different types of events are different, and a simple classification model cannot effectively identify an argument. That is, the effect of the event argument extraction is poor.

### SUMMARY

An event argument extraction method, an event argument extraction apparatus and an electronic device are provided, to solve the problem of poor event argument extraction effect.

In a first aspect, an event argument extraction method is provided. The method includes: acquiring a to-be-extracted event content; and performing an argument extraction on the to-be-extracted event content based on a trained event argument extraction model to acquire an target argument of the to-be-extracted event content; where, the trained event argument extraction model is acquired by training an intermediate extraction model by using event news annotation data, and the intermediate extraction model is acquired by training a pre-trained model by using event news samples and reading comprehension data.

In the event argument extraction method of the embodiment of the present disclosure, the trained event argument extraction model used to perform the argument extraction on the to-be-extracted event content is acquired by training the intermediate extraction model by using the event news annotation data, and the intermediate extraction model is acquired by training the pre-trained model by using the event news samples and the reading comprehension data. That is, the trained event argument extraction model is acquired through two trainings. Further, different data are used during the two training processes. Specifically, the intermediate extraction model is acquired by training the pre-trained model by using the event news samples and the reading comprehension data, so that the intermediate extraction model may learn a domain knowledge related to the event news samples and a knowledge related to the reading comprehension data. Then the trained event argument extraction model is acquired by training the intermediate extraction model by using event news annotation data. In this way, the performance of an acquired trained event argument extraction model may be improved, thus the argument extraction effect is improved.

Optionally, the trained event argument extraction model is acquired in the following manner: training the pre-trained model according to the event news samples, at least one first loss function, the reading comprehension data and a second loss function to acquire the intermediate extraction model; and training the intermediate extraction model according to the event news annotation data and a third loss function to acquire the trained event argument extraction model.

The pre-trained model is trained according to the event news samples, the at least one first loss function, the reading comprehension data and the second loss function, and then the intermediate extraction model is trained according to the event news annotation data and the third loss function, so that the performance of the trained event argument extraction model may be improved, thus the argument extraction effect is improved.

Optionally, the training the pre-trained model according to the event news samples, the at least one first loss function, the reading comprehension data and the second loss function to acquire the intermediate extraction model includes: inputting the event news samples to the pre-trained model and calculating a first loss value of the at least one first loss function, to acquire at least one first loss value; inputting the reading comprehension data to the pre-trained model, and calculating a second loss value of the second loss function; calculating a sum of the at least one first loss value and the second loss value to acquire a total loss value; and training the pre-trained model according to the total loss value to acquire the intermediate extraction model.

In other words, in the embodiment, the event news samples are inputted to the pre-trained model to calculate the first loss value of the at least one first loss function, to acquire at least one first loss value, while the reading comprehension data is inputted to the pre-trained model to calculate the second loss value of the second loss function. Then the total loss value is acquired, and the model training is performed according to the total loss value to acquire the intermediate extraction model. Thus, the performance of the intermediate extraction model may be improved.

Optionally, the training the intermediate extraction model according to the event news annotation data and the third loss function to acquire the trained event argument extraction model includes: performing a format conversion on the event news annotation data according to a format of the reading comprehension data, to acquire news question-answer data; and training the intermediate extraction model according to the news question-answer data and the third loss function to acquire the trained event argument extraction model.

In the embodiment, on the basis of training the pre-trained model according to the event news samples, the at least one first loss function, the reading comprehension data and the second loss function to acquire the intermediate extraction model, the intermediate extraction model is trained according to the news question-answer data acquired after format conversion and the third loss function to acquire the trained event argument extraction model. Thus, the performance of the trained event argument extraction model may be improved, and consequently the argument extraction effect is improved.

Optionally, the performing the argument extraction on the to-be-extracted event content based on the trained event argument extraction model to acquire the target argument of the to-be-extracted event content includes: constructing to-be-extracted question-answer data corresponding to the to-be-extracted event content according to a format of the reading comprehension data, where a format of the to-be-extracted question-answer data matches the format of the reading comprehension data; and inputting the to-be-extracted question-answer data to the trained event argument extraction model, and performing the argument extraction by using the trained event argument extraction model to acquire the target argument.

In the embodiment, the to-be-extracted question-answer data inputted to the event argument extraction model includes an event description sentence of the to-be-extracted event content, an event type of the to-be-extracted event content, and an argument role corresponding to the event type, and the to-be-extracted question-answer data of a format matching the format of the reading comprehension data is inputted to the trained event argument extraction model to perform the event argument extraction. Further, the event argument extraction model is acquired by a training based on the pre-trained model and using the event news samples and the reading comprehension data, thus the effect of event argument extraction is improved.

Optionally, the inputting the to-be-extracted question-answer data to the trained event argument extraction model, and performing the argument extraction by using the trained event argument extraction model to acquire the target argument includes: inputting the to-be-extracted question-answer data to the trained event argument extraction model, and predicting the target argument from an event description sentence of the to-be-extracted event content by using the trained event argument extraction model.

In this way, in the process of argument extraction, the target argument of the to-be-extracted event content can be acquired by extracting an argument from the event description sentence of the to-be-extracted event content in the inputted to-be-extracted question-answer data by using the trained event argument extraction model. Thus, the effect of extraction is improved.

In a second aspect, an event argument extraction apparatus is provided in an embodiment of the present disclosure. The apparatus includes: a first acquisition module, configured to acquire a to-be-extracted event content; and an extraction module, configured to perform an argument extraction on the to-be-extracted event content based on a trained event argument extraction model to acquire an target argument of the to-be-extracted event content; where, the trained event argument extraction model is acquired by training an intermediate extraction model by using event news annotation data, and the intermediate extraction model is acquired by training a pre-trained model by using event news samples and reading comprehension data.

Optionally, the trained event argument extraction model is acquired in the following manner: training the pre-trained model according to the event news samples, at least one first loss function, the reading comprehension data and a second loss function to acquire the intermediate extraction model; and training the intermediate extraction model according to the event news annotation data and a third loss function to acquire the trained event argument extraction model.

Optionally, the training the pre-trained model according to the event news samples, the at least one first loss function, the reading comprehension data and the second loss function to acquire the intermediate extraction model includes: inputting the event news samples to the pre-trained model and calculating a first loss value of the at least one first loss function, to acquire at least one first loss value; inputting the reading comprehension data to the pre-trained model, and calculating a second loss value of the second loss function; calculating a sum of the at least one first loss value and the second loss value to acquire a total loss value; and training the pre-trained model according to the total loss value to acquire the intermediate extraction model.

Optionally, the training the intermediate extraction model according to the event news annotation data and the third loss function to acquire the trained event argument extraction model includes: performing a format conversion on the event news annotation data according to a format of the reading comprehension data, to acquire news question-answer data; and training the intermediate extraction model according to the news question-answer data and the third loss function to acquire the trained event argument extraction model.

Optionally, the extraction module includes: a construction module, configured to construct to-be-extracted question-answer data corresponding to the to-be-extracted event content according to a format of the reading comprehension data, where a format of the to-be-extracted question-answer data matches the format of the reading comprehension data, and the to-be-extracted question-answer data includes an event description sentence of the to-be-extracted event content, an event type of the to-be-extracted event content, and an argument role corresponding to the event type; and an argument extraction module, configured to input the to-be-extracted question-answer data to the trained event argument extraction model, and perform the argument extraction by using the trained event argument extraction model to acquire the target argument.

Optionally, the inputting the to-be-extracted question-answer data to the trained event argument extraction model, and performing the argument extraction by using the trained event argument extraction model to acquire the target argument includes: inputting the to-be-extracted question-answer data to the trained event argument extraction model, and predicting the target argument from an event description sentence of the to-be-extracted event content by using the trained event argument extraction model.

In a third aspect, an electronic device is further provided in an embodiment of the present disclosure. The electronic device includes: at least one processor; and a memory in communication connection with the at least one processor; where, the memory stores therein an instruction executable by the at least one processor, and the instruction, when executed by the at least one processor, cause the at least one processor to implement the method in the embodiments of the present disclosure.

In a fourth aspect, a non-transitory computer-readable storage medium storing therein a computer instruction is further provided in an embodiment of the present disclosure, the computer instruction is configured to cause the computer to implement the method in the embodiments of the present disclosure.

### BRIEF DESCRIPTION OF THE DRAWINGS

The accompanying drawings are provided for better understanding of solutions, but shall not be construed as limiting the present disclosure. In these drawings,
Fig. 1 is a schematic flowchart illustrating an event argument extraction method according to an embodiment of the present disclosure;
Fig. 2 is a schematic diagram of an event argument extraction method according to an embodiment of the present disclosure;
Fig. 3 is a structural diagram of an event argument extraction apparatus according to an embodiment of the present disclosure; and
Fig. 4 is a block diagram of an electronic device used to implement an event argument extraction method in the embodiments of the present disclosure.

### DETAILED DESCRIPTION

The following describes exemplary embodiments of the present disclosure with reference to accompanying drawings. Various details of the embodiments of the present disclosure are included to facilitate understanding, and should be considered as being merely exemplary. Therefore, those of ordinary skill in the art should be aware that various changes and modifications may be made to the embodiments described herein without departing from the scope and spirit of the present disclosure. Likewise, for clarity and conciseness, descriptions of well-known functions and structures are omitted hereinafter.

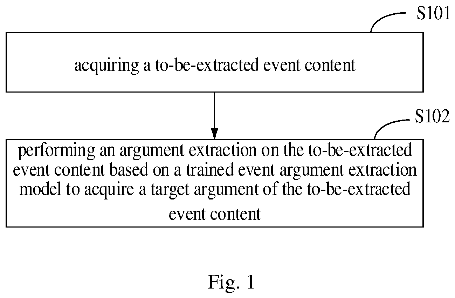

As shown in Fig. 1, an event argument extraction method is provided according to an embodiment of the present disclosure. The method may be applied to an electronic device and includes a step S101 and a step S102.

Step S 101, acquiring a to-be-extracted event content.

It is understood, the event content includes event news (for example, a news title, a news text, etc.) and the like. The to-be-extracted event content then includes to-be-extracted event news, and subsequently an argument extraction is performed on the to-be-extracted event content. The to-be-extracted event content may be acquired from an event in a practical application domain, and the to-be-extracted event content is associated with a target domain, that is, the to-be-extracted event content is an event content corresponding to the target domain. For example, for a financial domain, a to-be-extracted event content in the financial domain is acquired, and subsequently an argument extraction is performed. For another example, for an Internet technology domain, to-be-extracted event news is acquired from event news in the Internet technology domain, and subsequently an argument extraction is performed.

Step S102, performing an argument extraction on the to-be-extracted event content based on a trained event argument extraction model, to acquire a target argument of the to-be-extracted event content.

The trained event argument extraction model is acquired by training an intermediate extraction model by using event news annotation data, and the intermediate extraction model is acquired by training a pre-trained model by using event news samples and reading comprehension data.

The trained event argument extraction model is acquired in advance by training. After the to-be-extracted event content is acquired, the argument of the to-be-extracted event content may be extracted by using the trained event argument extraction model, so as to determine the target argument. In the embodiment, the trained event argument extraction model is acquired by a training based on the event news annotation data, the event news samples and the reading comprehension data. The event news annotation data may be construed as event argument annotation data,

i.e., the event news annotation data not only includes event news, but also includes argument annotation data, that is, arguments in the event news are annotated. The event news samples may be construed as news text, etc., and may be event news samples in a practical application domain, e.g., live news in the practical application domain. A format of the reading comprehension data is composed of three elements, i.e., a description sentence, a question, and an answer to the question (i.e., an argument). That is, the reading comprehension data includes an reading description sentence (corresponding to an content of a description sentence element, which may be construed as a reading text of the reading comprehension data), a reading question (corresponding to a content of a question element) and an answer corresponding to the reading question (which may be construed as a reading answer, and is a content in the corresponding reading description sentence that corresponds to an answer element). The reading comprehension data may be construed as question-and-answer mode data. The reading description sentence in the reading comprehension data may be acquired from such data as an existing book, an existing document and an existing paper. In the embodiment, the pre-trained model is trained by using the event news samples (which may be construed as event news text samples) and the reading comprehension data, so as to acquire the intermediate extraction model, and then the intermediate extraction model is trained by using the event news annotation data, so as to acquire the trained event argument extraction model. In an example, the pre-trained model refers to a pre-trained language model, and the pre-trained language model may be construed as a language model that has been trained in advance by using a data set (different from data used for training in this embodiment). In the embodiment, the pre-trained model is trained by using the event news annotation data, the event news samples and the reading comprehension data, so as to improve the performance of the trained event argument extraction model.

In the event argument extraction method of the embodiment of the present disclosure, the trained event argument extraction model used to perform the argument extraction on the to-be-extracted event content is acquired by training the intermediate extraction model by using the event news annotation data, and the intermediate extraction model is acquired by training the pre-trained model by using the event news samples and the reading comprehension data. That is, the trained event argument extraction model is acquired through two trainings. Further, different data are used during the two training processes. Specifically, the intermediate extraction model is acquired by training the pre-trained model by using the event news samples and the reading comprehension data, so that the intermediate extraction model may learn a domain knowledge related to the event news samples and a knowledge related to the reading comprehension data. Then the trained event argument extraction model is acquired by training the intermediate extraction model by using event news annotation data. In this way, the performance of the acquired trained event argument extraction model may be improved, and consequently the argument extraction effect is improved.

In an embodiment, the trained event argument extraction model is acquired in the following manner: training the pre-trained model according to the event news samples, at least one first loss function, the reading comprehension data and a second loss function to acquire the intermediate extraction model; and training the intermediate extraction model according to the event news annotation data and a third loss function to acquire the trained event argument extraction model.

It should be appreciated that, the training process of the pre-trained model may involve multiple loss functions. Different pre-trained models may correspond to different loss functions, specifically, different first loss functions. In the embodiment, the pre-trained model is trained according to the event news samples, the at least one first loss function, the reading comprehension data and the second loss function to acquire the intermediate extraction model, and the intermediate extraction model is trained by using the event news annotation data and the third loss function to acquire the trained event argument extraction model. That is, the model training process involves three types of loss functions, and the number of first loss functions may be at least one. In other words, there may be multiple first loss functions.

The pre-trained model is trained according to the event news samples, the at least one first loss function, the reading comprehension data and the second loss function, and the intermediate extraction model is trained according to the event news annotation data and the third loss function, so that the performance of the trained event argument extraction model may be improved, thus the argument extraction effect is improved.

In an embodiment, the training the pre-trained model according to the event news samples, the at least one first loss function, the reading comprehension data and the second loss function to acquire the intermediate extraction model includes: inputting the event news samples to the pre-trained model and calculating a first loss value of the at least one first loss function, to acquire at least one first loss value; inputting the reading comprehension data to the pre-trained model, and calculating a second loss value of the second loss function; calculating a sum of the at least one first loss value and the second loss value to acquire a total loss value; and training the pre-trained model according to the total loss value to acquire the intermediate extraction model.

In other words, in the embodiment, the event news samples are inputted to the pre-trained model to calculate the first loss value of the at least one first loss function, so as to acquire at least one first loss value; and the reading comprehension data is inputted to the pre-trained model to calculate the second loss value of the second loss function. Then the total loss value is acquired (the sum of the at least one first loss value and the second loss value), and a model training is performed according to the total loss value to acquire the intermediate extraction model. Thus, the performance of the intermediate extraction model may be improved. It should be appreciated that, with continuous input of the event news samples and the reading comprehension data, the first loss value and the second loss value are continuously updated, and the total loss value is continuously updated. In this way, according to the total loss value, model parameters are updated iteratively by means of gradient descent and back propagation, so as to obtain a convergent model, i.e., the intermediate extraction model.

In an embodiment, the training the intermediate extraction model according to the event news annotation data and the third loss function to acquire the trained event argument extraction model includes: performing a format conversion on the event news annotation data according to a format of the reading comprehension data, to acquire news question-answer data; and training the intermediate extraction model according to the news question-answer data and the third loss function to acquire the trained event argument extraction model.

As mentioned above, the format of the reading comprehension data includes three elements, i.e., the description sentence, the question and the answer. That is, the reading comprehension data is of a question-answer format. An answer of a reading question-answer in the reading comprehension data is acquired from a corresponding description sentence according to a reading question. The format conversion may be performed on the event news annotation data according to the question-answer format of the reading comprehension data. That is, the event news annotation data is converted into news question-answer data in the question-answer format. A content of an answer element in the news question-answer data is an argument annotated in the event news annotation data, and event news in the event news annotation data corresponds to a content of the description sentence element. Moreover, the question is constructed according to an event type in the event news annotation data and each argument role of the event type. The argument role corresponding to each event type is predetermined, and the event type of the event news annotation data may be determined in a variety of ways, which is not limited in the embodiment. For example, the event type may be predicted from the event news annotation data by using an existing event type classification model.

In the embodiment, on the basis of acquiring the intermediate extraction model by training the pre-trained model by using the event news samples, the at least one first loss function, the reading comprehension data and the second loss function, the intermediate extraction model is trained according to the news question-answer data acquired after format conversion and the third loss function to acquire the trained event argument extraction model. Thus, the performance of the trained event argument extraction model may be improved, and consequently the argument extraction effect is improved.

In an embodiment, the performing the argument extraction on the to-be-extracted event content based on the trained event argument extraction model to acquire the target argument of the to-be-extracted event content includes: constructing to-be-extracted question-answer data corresponding to the to-be-extracted event content according to a format of the reading comprehension data, where a format of the to-be-extracted question-answer data matches the format of the reading comprehension data; and inputting the to-be-extracted question-answer data to the trained event argument extraction model, and performing the argument extraction by using the trained event argument extraction model to acquire the target argument.

After the to-be-extracted event content is acquired, a format conversion is performed on the to-be-extracted event news according to the format of the reading comprehension data to acquire to-be-extracted question-answer data of the to-be-extracted event news, where the format of the to-be-extracted question-answer data matches the format of the reading comprehension data. Then the to-be-extracted question-answer data is inputted to the trained event argument extraction model, and the argument extraction is performed by using the event argument extraction model to acquire the target argument of the to-be-extracted event content.

In the embodiment, the to-be-extracted question-answer data of a format matching the format of the reading comprehension data is inputted to the trained event argument extraction model to perform the event argument extraction, while the event argument extraction model is acquired by a training based on the pre-trained model and using the event news samples and the reading comprehension data, thus the effect of event argument extraction is improved.

In an example, the format of the to-be-extracted question-answer data includes two of the three elements in the format of the reading comprehension data, i.e., the description sentence element and the question element. Thus, the format of the to-be-extracted question-answer data may be deemed as matching the format of the reading comprehension data.

In an embodiment, the constructing the to-be-extracted question-answer data corresponding to the to-be-extracted event content according to the format of the reading comprehension data includes: predicting the event type of the to-be-extracted event content by using a trained event type classification model; predicting an event description sentence of the to-be-extracted event content by using a trained event sentence discrimination model; and constructing the to-be-extracted question-answer data corresponding to the to-be-extracted event content based on the event type, the event description sentence, the argument role corresponding to the event type and the format of the reading comprehension data, where, the to-be-extracted question-answer data includes the event description sentence of the to-be-extracted event content, the event type of the to-be-extracted event content and the argument role corresponding to the event type.

After the to-be-extracted event content is acquired, the event type may be predicted by using the trained event type classification model, the event description sentence of the to-be-extracted event news may be acquired by using the trained event sentence discrimination model, and the to-be-extracted question-answer data of the to-be-extracted event news may be constructed using the event description sentence of the to-be-extracted event news, the event type, and the argument role corresponding to the event type according to the format of the reading comprehension data. The format of the to-be-extracted question-answer data matches the format of the reading comprehension data. Then the to-be-extracted question-answer data is inputted to the trained event argument extraction model, and the argument extraction may be performed by using the event argument extraction model, to acquire the target argument of the to-be-extracted event content.

In the embodiment, the to-be-extracted question-answer data inputted to the event argument extraction model includes the event description sentence of the to-be-extracted event content, the event type of the to-be-extracted event content, and the argument role corresponding to the event type, and the to-be-extracted question-answer data of a format matching the format of the reading comprehension data is inputted to the trained event argument extraction model to perform the event argument extraction. The event argument extraction model is acquired by a training based on the pre-trained model and using the event news samples and the reading comprehension data. Thus, the effect of event argument extraction is improved.

As mentioned above, the format of the to-be-extracted question-answer data includes two of the three elements in the format of the reading comprehension data, i.e., the description sentence element and the question element. Thus, the format of the to-be-extracted question-answer data may be deemed as matching the format of the reading comprehension data. In one example, the event description sentence in the to-be-extracted event news corresponds to the content of the description sentence element. That is, the to-be-extracted question-answer data includes contents of the event description sentence element and the question element in the to-be-extracted event news (the content of the question element in the to-be-extracted question-answer data includes the predicted event type of the to-be-extracted event news and the argument role corresponding to the event type of the to-be-extracted event news).

In an embodiment, the inputting the to-be-extracted question-answer data to the trained event argument extraction model, and performing the argument extraction by using the trained event argument extraction model to acquire the target argument includes: inputting the to-be-extracted question-answer data to the trained event argument extraction model, and predicting the target argument from the event description sentence of the to-be-extracted event content by using the trained event argument extraction model.

The to-be-extracted question-answer data is inputted to the trained event argument extraction model, and an answer to the question in the to-be-extracted question-answer data is predicted from the event description sentence of the to-be-extracted question-answer data by using the event argument extraction model. That is, an answer corresponding to the content of the question element in the to-be-extracted question-answer data is predicted from the event description sentence of the to-be-extracted question-answer data to serve as the target argument of the to-be-extracted event content. In this way, in the process of argument extraction, the target argument of the to-be-extracted event content may be acquired by extracting an argument from the event description sentence of the to-be-extracted event content in the inputted to-be-extracted question-answer data by using the trained event argument extraction model. Thus, the effect of extraction is improved.

The process of the foregoing event argument extraction method is described below in detail with respect to a specific embodiment.

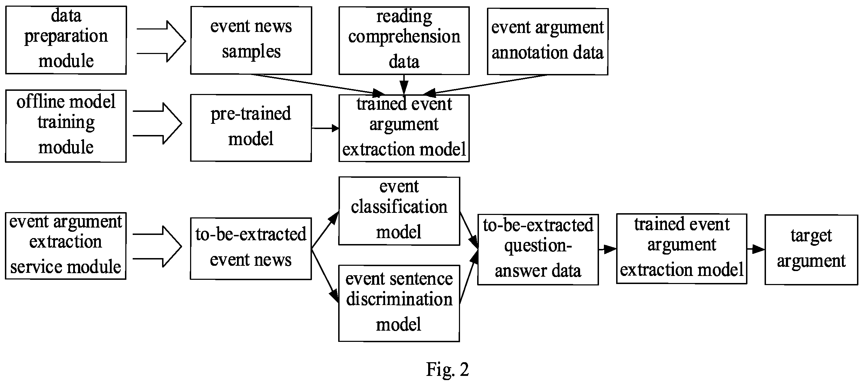

Fig. 2 is a schematic diagram of a system for implementing the event argument extraction method. The system includes a data preparation module, an event argument extraction model offline training module and an event argument extraction service module.

First, the data preparation module may collect the event news samples, the reading comprehension data and the event news annotation data. In a current event graph project, there is an event detection system available for mining the event news samples from an information stream. The reading comprehension data may be acquired from an open source Chinese reading comprehension data set DuReader and an English data set SQUAD. According to the question-answer format of the reading comprehension data, a format conversion is performed on the event news argument annotation data to acquire the news question-answer data. In order to form the news question-answer data in the question-answer format of the reading comprehension data, the news content of the news argument annotation data is used as the event description sentence of the news argument annotation data, i.e., the content of the description sentence element; the question is constructed from the event type and each argument role; and the argument corresponding to the argument role is used as the answer. For example, a content of a description sentence is "Yunpeng Yue posted a funny big face photo to attract the crowd, which was exposed immediately by his wife", a content of a question is "posting a photo, the content of the photo", and a content of an answer is the "funny big face photo". The "posting a photo" is an event type, and "the content of the photo" is one argument role of the event type. The argument role corresponding to the event type is predetermined. After the event type is determined, the corresponding argument role may be determined. It should be appreciated that, the content of the question includes the event type and the argument role corresponding to the event type.

Second, in the event argument extraction model offline training module, a case where the pre-trained model is a deep pre-trained model, and the deep pre-trained model is a bidirectional encoder representation from transformers (BERT) is taken as an example. On the basis of the deep pre-trained model, the event news samples are inputted to the deep pre-trained model to calculate a masked language model (masked LM) loss function and a next sentence prediction loss function, that is, the at least one first loss function includes the masked language model loss function and the next sentence prediction loss function, to acquire a loss value of the masked language model loss function and a loss value of the next sentence prediction loss function, that is, a loss value of the at least one first loss function is acquired. Then a sum of the loss value of the next sentence prediction loss function and the loss value of the next sentence prediction loss function is acquired, so as to acquire a loss value Loss_KD. The reading comprehension data (such as DuReader) is inputted to the deep pre-trained model to calculate the loss value Loss_MRC, i.e., the second loss value, between an answer predicted by the deep pre-trained model from the reading comprehension data and a standard answer in the reading comprehension data (i.e., the reading answer in the reading comprehension data) (in other words, it should be appreciated that, the second loss function is related to the answer predicted by the deep pre-trained model from the reading comprehension data and the standard answer in the reading comprehension data). The total loss value Loss=Loss_KD+Loss_MRC. Using the total loss value, the model parameters are updated iteratively by means of gradient descent and back propagation, so as to acquire a convergent post-training model, i.e., the intermediate extraction model. Then, the news question-answer data acquired by performing the format conversion on the event argument annotation data is used to fine-tune the intermediate extraction model, so as to acquire the trained event argument extraction model. Thus, the event argument extraction capability of the model is improved.

Third, in the event argument extraction service module, the to-be-extracted event news (such as, a news title, a news text), i.e., the to-be-extracted event content, is acquired, the event type is predicted by using an existing event type classification model (i.e., the trained event type classification model), the event description sentence of the to-be-extracted event news is acquired by using an existing event sentence discrimination model (i.e., the trained event sentence discrimination model), and the to-be-extracted question-answer data of the to-be-extracted event news is constructed using the event description sentence of the to-be-extracted event news, the event type, the argument role corresponding to the event type according to the format of the reading comprehension data. The format of the to-be-extracted question-answer data matches the format of the reading comprehension data. It should be appreciated that, the format of the to-be-extracted question-answer data includes two of the three elements in the format of the reading comprehension data, i.e., the description sentence element and the question element. Thus, the format of the to-be-extracted question-answer data may be deemed as matching the format of the reading comprehension data. The event description sentence in the to-be-extracted event news corresponds to the content of the description sentence element. That is, the to-be-extracted question-answer data includes contents of the event description sentence element and the question element in the to-be-extracted event news (the content of the question element in the to-be-extracted question-answer data includes the predicted event type of the to-be-extracted event news and the argument role corresponding to the event type of the to-be-extracted event news). The to-be-extracted question-answer data is inputted to the trained event argument extraction model, and the answer to the question in the to-be-extracted question-answer data is predicted from the event description sentence by using the event argument extraction model to serve as the target argument of the to-be-extracted event news.

According to the present disclosure, the to-be-extracted question-answer data in the question-answer format of the to-be-extracted event news is inputted to the trained event argument extraction model for event argument extraction, and on the basis of the deep pre-trained model, the event news samples and the reading comprehension data are introduced, thus the effect of event argument extraction is improved and a better extraction effect is achieved in the practical application scenario.

The event argument extraction may find substantial applications in the event graph project. Through the event argument extraction, the event is displayed and represented in a structured form. The event is displayed in a "big search" event and a Feed event context, so that users may quickly understand the event. In addition, the event argument extraction may be applied to various domains, such as the financial domain. The event argument extraction may be used to extract corporate events, to enable efficient risk control, etc.

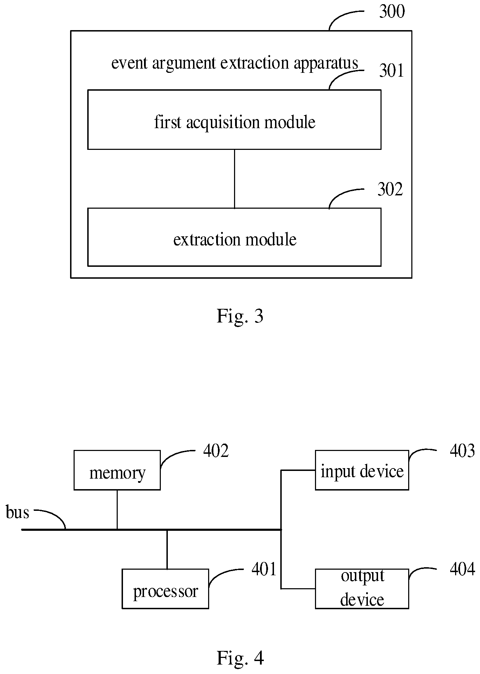

Referring to Fig. 3, the present disclosure provides in an embodiment an event argument extraction apparatus 300, which may be applied to an electronic device. The apparatus 300 includes: a first acquisition module 301, configured to acquire a to-be-extracted event content; and an extraction module 302, configured to perform an argument extraction on the to-be-extracted event content based on a trained event argument extraction model to acquire an target argument of the to-be-extracted event content; where, the trained event argument extraction model is acquired by training an intermediate extraction model by using event news annotation data, and the intermediate extraction model is acquired by training a pre-trained model by using event news samples and reading comprehension data.

In an embodiment, the trained event argument extraction model is acquired in the following manner: training the pre-trained model according to the event news samples, at least one first loss function, the reading comprehension data and a second loss function to acquire the intermediate extraction model; and training the intermediate extraction model according to the event news annotation data and a third loss function to acquire the trained event argument extraction model.

In an embodiment, the training the pre-trained model according to the event news samples, the at least one first loss function, the reading comprehension data and the second loss function to acquire the intermediate extraction model includes: inputting the event news samples to the pre-trained model and calculating a first loss value of the at least one first loss function, to acquire at least one first loss value; inputting the reading comprehension data to the pre-trained model, and calculating a second loss value of the second loss function; calculating a sum of the at least one first loss value and the second loss value to acquire a total loss value; and training the pre-trained model according to the total loss value to acquire the intermediate extraction model.

In an embodiment, the training the intermediate extraction model according to the event news annotation data and the third loss function to acquire the trained event argument extraction model includes: performing a format conversion on the event news annotation data according to a format of the reading comprehension data, to acquire news question-answer data; and training the intermediate extraction model according to the news question-answer data and the third loss function to acquire the trained event argument extraction model.

In an embodiment, the extraction module includes: a construction module, configured to construct to-be-extracted question-answer data corresponding to the to-be-extracted event content according to a format of the reading comprehension data, where a format of the to-be-extracted question-answer data matches the format of the reading comprehension data; and an argument extraction module, configured to input the to-be-extracted question-answer data to the trained event argument extraction model, and perform the argument extraction by using the trained event argument extraction model to acquire the target argument.

In an embodiment, the construction module includes: a first prediction module, configured to predict an event type of the to-be-extracted event content by using a trained event type classification model; a second prediction module, configured to predict an event description sentence of the to-be-extracted event content by using a trained event sentence discrimination model; and a first construction sub-module, configured to construct the to-be-extracted question-answer data corresponding to the to-be-extracted event content based on the event type, the event description sentence, the argument role corresponding to the event type, and the format of the reading comprehension data. The to-be-extracted question-answer data includes the event description sentence of the to-be-extracted event content, the event type of the to-be-extracted event content and the argument role corresponding to the event type.

In an embodiment, the inputting the to-be-extracted question-answer data to the trained event argument extraction model, and performing the argument extraction by using the trained event argument extraction model to acquire the target argument includes: inputting the to-be-extracted question-answer data to the trained event argument extraction model, and predicting the target argument from an event description sentence of the to-be-extracted event content by using the trained event argument extraction model.

The event argument extraction apparatus in the above embodiments are apparatuses that implement the event argument extraction method in the above embodiments, and technical features and technical effects thereof correspond to those of the event argument extraction method in the above embodiments, which are not repeated herein.

According to embodiments of the present disclosure, an electronic device and a readable storage medium are further provided.

As shown in Fig. 4, a block diagram of an electronic device for implementing the event argument extraction method in the embodiment of the present disclosure is shown. The electronic device is intended to represent various forms of digital computers, such as a laptop computer, desktop computer, workstation, personal digital assistant, server, blade server, mainframe computer, and other suitable computer. The electronic device may also represent various forms of mobile devices, such as a personal digital assistant, cellular phone, smart phone, wearable device, and other similar computing device. The components shown herein, their connections and relationships, and their functions are by way of example only and are not intended to limit the implementations of the present disclosure described and/or claimed herein.

As shown in Fig. 4, the electronic device includes: one or more processors 401, a memory 402, and interfaces for connecting various components, including a high-speed interface and a low-speed interface. The various components are interconnected using different buses and may be mounted on a common motherboard or mounted in another manner as desired. The processors may process instructions configured to be executed in the electronic device, and the instructions include instructions stored in the memory or on the memory to display graphical information of GUI on an external input/output device, such as a display device coupled to the interface. In other embodiments, multiple processors and/or multiple buses may be used with multiple memories, if necessary. Also, multiple electronic devices may be connected, and each electronic device provides some of the necessary operations (e.g., in a server array, a group of blade servers, or a multi-processor system). Fig.4 illustrates a single processor 401 as an example.

The memory 402 is a non-transitory computer-readable storage medium provided herein. The memory stores therein an instruction executable by the at least one processor to cause the at least one processor to implement the event argument extraction method in the present disclosure. The non-transitory computer-readable storage medium of the present disclosure stores a computer instruction, and the computer instruction is configured to cause a computer to implement the event argument extraction method according to the present disclosure.

The memory 402, as a non-transitory computer-readable storage medium, may be used to store non-transitory software programs, non-transitory computer-executable programs, and modules, such as program instructions/modules (e.g., the first acquisition module 301 and the extraction module 302 shown in Fig. 3) corresponding to the event argument extraction method in the embodiments of the present disclosure. By running non-transitory software programs, instructions and modules stored in the memory 402, the processor 401 performs various functional applications and data processing of the server, i.e., implements the event argument extraction method in the foregoing method embodiment.

The memory 402 may include a program storage area and a data storage area, where the program storage area may store an operating system, and an application program required for at least one function; and the data storage area may store data created according to the usage of the electronic device. In addition, the memory 402 may include a high speed random access memory, and may also include a non-transitory memory, such as at least one magnetic disk storage device, flash memory device, or other non-transitory solid state storage device. In some embodiments, the memory 402 may optionally include a memory located remotely with respect to the processor 401. These remote memories may be connected via a network to the electronic device. Examples of the network include, but are not limited to, the Internet, an intranet, a local area network, a mobile communication network, and a combination thereof.

The electronic device for implementing the event argument extraction method may further include: an input device 403 and an output device 404. The processor 401, the memory 402, the input device 403, and the output device 404 may be connected to each other via a bus or in other ways. In Fig. 4, a connection by a bus is taken as an example.

The input device 403 may receive input numeric or character information and generate key signal inputs related to user settings and functional controls of the electronic device. For example, the input device may include a touch screen, a keypad, a mouse, a trackpad, a touch pad, a pointing stick, one or more mouse buttons, a trackball, a joystick, etc. The output device 404 may include a display device, an auxiliary lighting device (e.g., LED), a tactile feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuitry, integrated circuit systems, application-specific integrated circuits (ASICs), computer hardware, firmware, software, and/or combinations thereof. These various embodiments may include implementation in one or more computer programs that may be executed and/or interpreted on a programmable system including at least one programmable processor. The programmable processor may be a dedicated or general purpose programmable processor, and may receive data and instructions from a storage system, at least one input device and at least one output device, and transmit data and instructions to the storage system, the at least one input device and the at least one output device.

These computing programs (also referred to as programs, software, software applications, or codes) include machine instructions for a programmable processor, and may be implemented using procedural and/or object-oriented programming languages, and/or assembly/machine languages. As used herein, the terms "machine-readable medium" and "computer-readable medium" refer to any computer program product, apparatus, and/or device (e.g., magnetic disk, optical disc, memory, programmable logic device (PLD)) for providing machine instructions and/or data to a programmable processor, including a machine-readable medium that receives machine instructions implemented as machine-readable signals. The term "machine-readable signal" refers to any signal used to provide machine instructions and/or data to a programmable processor.

To provide interaction with a user, the systems and techniques described herein may be implemented on a computer having: a display device (e.g., a cathode ray tube (CRT) or liquid crystal display (LCD) monitor) for displaying information to a user; and a keyboard and a pointing device (e.g., a mouse or a trackball) through which a user may provide input to the computer. Other types of devices may also be used to provide interaction with a user; for example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or a computing system that includes any combination of such background components, middleware components, or front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are typically far away from each other and typically interact through a communication network. The relationship of the client and the server is generated by computer programs running on respective computers and having a client-server relationship with each other.

According to the technical scheme of the embodiments of the present disclosure, the trained event argument extraction model used to perform the argument extraction on the to-be-extracted event content is acquired by training the intermediate extraction model based on the event news annotation data, and the intermediate extraction model is acquired by training the pre-trained model by using the event news samples and the reading comprehension data. That is, the trained event argument extraction model is acquired through two trainings. Further, different data are used during the two training processes. Specifically, the intermediate extraction model is acquired by training the pre-trained model by using the event news samples and the reading comprehension data, so that the intermediate extraction model may learn a knowledge related to the event news samples and a knowledge related to the reading comprehension data. Then the trained event argument extraction model is acquired by training the intermediate extraction model based on event news annotation data. In this way, the performance of the acquired trained event argument extraction model may be improved, thus the argument extraction effect is improved.

It should be appreciated that the various forms of flows described above may be used, and the steps may be reordered, added or deleted. For example, the steps recited in the present disclosure may be performed in parallel or sequentially or may be performed in a different order, so long as the desired results of the technical solutions disclosed in the present disclosure can be achieved, which is not limited herein.

The above-described embodiments are not to be construed as limiting the scope of the present disclosure. It will be apparent to those skilled in the art that various modifications, combinations, sub-combinations and substitutions are possible based on design requirements and other factors. Any modifications, equivalents, and improvements within the spirit and principles of the present disclosure shall be included within the scope of the present disclosure.

## Claims

1. An event argument extraction method, comprising:
acquiring a to-be-extracted event content; and
performing an argument extraction on the to-be-extracted event content based on a trained event argument extraction model, to acquire an target argument of the to-be-extracted event content;
wherein, the trained event argument extraction model is acquired by training an intermediate extraction model by using event news annotation data, and the intermediate extraction model is acquired by training a pre-trained model by using event news samples and reading comprehension data.

2. The event argument extraction method according to claim 1, wherein the trained event argument extraction model is acquired in the following manner:
training the pre-trained model according to the event news samples, at least one first loss function, the reading comprehension data and a second loss function to acquire the intermediate extraction model; and
training the intermediate extraction model according to the event news annotation data and a third loss function to acquire the trained event argument extraction model.

3. The event argument extraction method according to claim 2, wherein the training the pre-trained model according to the event news samples, the at least one first loss function, the reading comprehension data and the second loss function to acquire the intermediate extraction model comprises:
inputting the event news samples to the pre-trained model and calculating a first loss value of the at least one first loss function, to acquire at least one first loss value;
inputting the reading comprehension data to the pre-trained model and calculating a second loss value of the second loss function;
calculating a sum of the at least one first loss value and the second loss value to acquire a total loss value; and
training the pre-trained model according to the total loss value to acquire the intermediate extraction model.

4. The event argument extraction method according to claim 2, wherein the training the intermediate extraction model according to the event news annotation data and the third loss function to acquire the trained event argument extraction model comprises:
performing a format conversion on the event news annotation data according to a format of the reading comprehension data, to acquire news question-answer data; and
training the intermediate extraction model according to the news question-answer data and the third loss function to acquire the trained event argument extraction model.

5. The event argument extraction method according to claim 1, wherein the performing the argument extraction on the to-be-extracted event content based on the trained event argument extraction model to acquire the target argument of the to-be-extracted event content comprises:
constructing to-be-extracted question-answer data corresponding to the to-be-extracted event content according to a format of the reading comprehension data, wherein a format of the to-be-extracted question-answer data matches the format of the reading comprehension data; and
inputting the to-be-extracted question-answer data to the trained event argument extraction model, and performing the argument extraction by using the trained event argument extraction model to acquire the target argument.

6. The event argument extraction method according to claim 5, wherein the inputting the to-be-extracted question-answer data to the trained event argument extraction model, and performing the argument extraction by using the trained event argument extraction model to acquire the target argument comprises:
inputting the to-be-extracted question-answer data to the trained event argument extraction model, and predicting the target argument from an event description sentence of the to-be-extracted event content by using the trained event argument extraction model.

7. An event argument extraction apparatus, comprising:
a first acquisition module, configured to acquire a to-be-extracted event content; and
an extraction module, configured to perform an argument extraction on the to-be-extracted event content based on a trained event argument extraction model to acquire an target argument of the to-be-extracted event content;
wherein, the trained event argument extraction model is acquired by training an intermediate extraction model by using event news annotation data, and the intermediate extraction model is acquired by training a pre-trained model by using event news samples and reading comprehension data.

8. The event argument extraction apparatus according to claim 7, wherein the trained event argument extraction model is acquired in the following manner:
training the pre-trained model according to the event news samples, at least one first loss function, the reading comprehension data and a second loss function to acquire the intermediate extraction model; and
training the intermediate extraction model according to the event news annotation data and a third loss function to acquire the trained event argument extraction model.

9. The event argument extraction apparatus according to claim 8, wherein the training the pre-trained model according to the event news samples, the at least one first loss function, the reading comprehension data and the second loss function to acquire the intermediate extraction model comprises:
inputting the event news samples to the pre-trained model and calculating a first loss value of the at least one first loss function, to acquire at least one first loss value;
inputting the reading comprehension data to the pre-trained model, and calculating a second loss value of the second loss function;
calculating a sum of the at least one first loss value and the second loss value to acquire a total loss value; and
training the pre-trained model according to the total loss value to acquire the intermediate extraction model.

10. The event argument extraction apparatus according to claim 8, wherein the training the intermediate extraction model according to the event news annotation data and the third loss function to acquire the trained event argument extraction model comprises:
performing a format conversion on the event news annotation data according to a format of the reading comprehension data, to acquire news question-answer data; and
training the intermediate extraction model according to the news question-answer data and the third loss function to acquire the trained event argument extraction model.

11. The event argument extraction apparatus according to claim 7, wherein the extraction module comprises:
a construction module, configured to construct to-be-extracted question-answer data corresponding to the to-be-extracted event content according to a format of the reading comprehension data, wherein a format of the to-be-extracted question-answer data matches the format of the reading comprehension data; and
an argument extraction module, configured to input the to-be-extracted question-answer data to the trained event argument extraction model, and perform the argument extraction by using the trained event argument extraction model to acquire the target argument.

12. The event argument extraction apparatus according to claim 11, wherein the inputting the to-be-extracted question-answer data to the trained event argument extraction model, and performing the argument extraction by using the trained event argument extraction model to acquire the target argument comprises:
inputting the to-be-extracted question-answer data to the trained event argument extraction model, and predicting the target argument from an event description sentence of the to-be-extracted event content by using the trained event argument extraction model.

13. An electronic device, comprising:
at least one processor; and
a memory in communication connection with the at least one processor; wherein,
the memory stores therein an instruction executable by the at least one processor, and the instruction, when executed by the at least one processor, cause the at least one processor to implement the method according to any one of claims 1 to 6.

14. A non-transitory computer-readable storage medium storing therein a computer instruction, wherein the computer instruction is configured to cause the computer to implement the method according to any one of claims 1 to 6.
